# EUROPÄISCHE PATENTSCHRIFT

(11) **EP 1 650 456 B1**
(45) Veröffentlichungstag und Bekanntmachung des Hinweises auf die Patenterteilung: **27.06.2007**
(21) Anmeldenummer: 05018642.8
(22) Anmeldetag: 27.08.2005
(51) Int. Cl.: F16D 23/06

(54) **Rastelement**
Blocking element
Elément de blocage

(30) Priorität: 22.10.2004 DE 102004051426
(43) Veröffentlichungstag der Anmeldung: 26.04.2006
(73) Patentinhaber: Schaeffler KG, 91074 Herzogenaurach (DE)
(72) Erfinder: Spoerl, Marcus, 91126 Rednitzhembach (DE); Nurrohmah, Novia, 90419 Nürnberg (DE)

(56) Entgegenhaltungen:
- DE-A1- 10 225 269
- DE-A1- 10 231 602
- DE-U1- 20 216 782

## Beschreibung

### Gebiet der Erfindung

Die Erfindung betrifft Rastelement zum Verrasten zweier zueinander beweglicher Getriebeteile in wenigstens einer Stellposition, wobei das Rastelement einen aus Blech geformten Grundkörper, an dem sich wenigstens ein Federelement abstützt, aufweist und der Grundkörper schalenförmig mit einem quer zur Druckrichtung ausgerichteten Boden sowie mit vom Boden abgewinkelt abgehenden Wänden ausgebildet ist, wobei der Grundkörper mit einer Kappe abgedeckt ist.

### Hintergrund der Erfindung

Es ist dem Fachmann bekannt, dass derartige Rastelemente für verschiedene Anwendungen in Schaltgetrieben von Kraftfahrzeugen vorzusehen sind. Sie arretieren bewegliche Getriebeelemente in Schalt- oder Wählpositionen, so dass diese Getriebeelemente trotz Erschütterungen während des Fahrbetriebs in den vorgegebenen Stellpositionen verbleiben. Derartige Getriebeelemente sind z. B. dreh- und längsverschiebbare Schaltwellen, längsverschiebbare Schaltschienen und schwenkbare Schaltbolzen. Die Arretierungen sind dabei gegen eine Rastkontur vorgespannt, deren Oberfläche in der Regel durch die Kontur eines Rastgebirges mit Erhöhungen und Vertiefungen beschrieben ist. In den vorgegebenen Wähl- bzw. Schaltpositionen verrastet die Arretierung in einer der Vertiefungen des Rastgebirges und hält das Getriebeelement in dieser Position. In der Vergangenheit war die Fachwelt bestrebt, in handgeschalteten Getrieben, besonders für die letztgenannten Anwendungen, Arretierungen einzusetzen, bei denen in aufwändiger Weise längsbeweglich wälzgelagerte Arretierbolzen mit einer kugelgelagerten Arretierkugel in einem Gehäuse der Arretierung eingesetzt sind. Mit dem Einsatz derartig wälzgelagerter Arretierungen sollte und soll das von der Bedienperson am Handschalthebel beim Wählen und Schalten deutlich spürbare "Hakeln" gemindert werden. Mit dem immer häufigeren Einsatz von hilfskraftbetätigten bzw. automatisierten Schaltgetrieben ist die Verwendung derartiger relativ kostspieliger Arretierungen oftmals nicht mehr notwendig. In ihrer Ausführung einfachere, jedoch robuste und kostengünstig herzustellende Arretierungen sind zunehmend gefragt.

Arretierungen sind weiterhin auch in den bekannten Schaltkupplungen vorgesehen, die für das drehfeste Verbinden von Gangrädern mit einer Getriebewelle beim Schalten von Gängen eingesetzt sind. Die Schaltmuffe dieser Schaltkupplungen ist auf dem Schaltmuffenträger zumeist in einer neutralen Position mittels einer Arretierung gehalten. In dieser Stellposition sind gegen die Schaltmuffe drei bis vier am Umfang des Schaltmuffenträgers angeordnete und an dem Schaltmuffenträger gehaltene Arretierungen vorgespannt. Dazu stützen sich die Arretierungen an dem Schaltmuffenträger ab und greifen in Rastvertiefungen an der Schaltmuffe. Weiterhin sind in als Synchronkupplung ausgebildeten Schaltkupplungen auch Rastelemente in Form von Druckstücken eingesetzt. Die Druckstücke sitzen längsverschiebbar in einem Schaltmuffenträger. Die in dieser Anwendung eingesetzten Arretierungen oder Druckstücke bzw. Kombinationen aus Arretierungen und Druckstücken sind relativ einfach gestaltet und unter anderem auch durch blattfederartige bzw. bügelartige flache Federelemente gebildet. Flache, bügelartig gestaltete Federelemente sind gegenüber Schraubenfedern oftmals bevorzugt, da sie bei geringer Bauhöhe relativ viele Variationen in der Auslegung der Federcharakteristik zulassen. Der Schaltmuffenträger ist mit Aufnahmen geringer radialer Tiefe für diese Arretierungen versehen. Die Stabilität des Trägers, insbesondere die Steifigkeit seiner Körperstruktur ist aufgrund der Ausnehmungen geringer Tiefe nur relativ geringfügig nachteilig beeinflusst.

Ein Rastelement in Form eines Druckstücks der gattungsbildenden Art ist in EP 0 870 941 A1 beschrieben. An einem Grundkörper aus Blech ist ein elastisches Federelement ausgebildet. Das elastische Federelement ist direkt aus dem Blech des Grundkörpers geformt, steht von dem Grundkörper ab und ist bügclartig gebogen. Der Grundkörper stützt sich an einem Schaltmuffenträger ab, wobei das Federelement gegen eine auf dem Schaltmuffenträger sitzende Schaltmuffe vorgespannt und in einer Rastvertiefung verrastet ist. Bei einer Schaltbewegung nimmt die Schaltmuffe das Druckstück zunächst in Richtung des zu schaltenden Gangrades längs mit, wodurch der bekannte Synchronisationsprozess eingeleitet ist. Größerer axialer Widerstand auf das Rastelement bei weiter in Richtung des Gangrades längsbewegter Schaltmuffe zwingt das Federelement aus der Rastvertiefung an der Schaltmuffe in Richtung des Grundkörpers einzufedern. Das Federelement schnappt wieder in die Rastvertiefung ein, wenn die Schaltmuffe in die neutrale Stellposition zurückgeführt wird. Nachteilig an der an sich zufrieden stellenden Lösung ist, dass das Rastelement, insbesondere wenn diese auch als Druckstück eingesetzt ist, nicht robust genug für den Einsatz in automatisierten Schaltgetrieben ist. Die Schaltung ist beispielsweise elektromotorisch betätigt. Dabei findet der Synchronisations- und Schaltvorgang vergleichsweise zu handkraftbetätigten Schaltvorgängen in wesentlich kürzeren Zeiträumen und ohne das durch die Bedienperson üblicherweise aufgebrachte Feingefühl statt. Die Einzelteile der Schaltkupplung treffen z. B. schlagartig aufeinander, wodurch das aus Federstahl gefertigte Rastelement gefährdet ist.

Ein Ansatz, dieses Problem zu lösen, ist in der DE 102 25 269 A1 vorgestellt: Der Grundkörper des Rastelements ist schalenförmig mit einem quer zur Druckrichtung ausgerichteten Boden und mit von dem Boden abgewinkelten abgehenden Wänden ausgebildet, wobei der Grundkörper wenigstens teilweise mit einer dem Boden in Druckrichtung gegenüber liegenden Kappe abgedeckt ist. Sie ist zu dem Grundkörper längs beweglich, und zwischen ihnen ist mindestens ein Federelement eingekapselt. Das Federelement besteht aus Federbügeln mit zwei Schenkeln, wobei die Schenkel gegen die Kappe vorgespannt sind. Lage und Ausrichtung des Federelements sind durch eine Führung bzw. dessen Befestigung in dem Grundkörper abgesichert, um ein Verkippen und Verdrehen zu verhindern. Bei senkrecht auf die Kappe einwirkenden Kräften wird das auch zuverlässig bewerkstelligt. Es hat sich jedoch herausgestellt, dass schräg einwirkende Kräfte zu einem Verkippen führen können und somit die Funktionsfähigkeit beeinträchtigen. Ein weiterer Nachteil der als Federbügel ausgebildeten Federelemente ist, dass sie relativ klein und bei ihrer Montage unhandlich sind. Schließlich baut das Rastelement relativ hoch.

### Zusammenfassung der Erfindung

Die Aufgabe der Erfindung ist es daher, ein Rastelement in Form eines Druckstücks oder einer Arretierung zu schaffen, das robust ist, bei dem die oben genannten Nachteile beseitigt sind und das sich zusätzlich kostengünstig fertigen lässt.

Diese Aufgabe ist nach dem Gegenstand des kennzeichnenden Teils des Anspruchs 1 dadurch gelöst, dass das Federelement als eine Wellfeder ausgebildet ist. Grundsätzlich ist die Form der Wellfeder beliebig, idealerweise ist sie allerdings dem Grundkörper derart angepasst, dass sie in diesen einsetzbar ist und im eingesetzten Zustand ein Randspalt zu dem Grundkörper verbleibt. Obwohl sich jedes Material mit einem hinreichend großen Elastizitätsmodul eignet, ist es besonders vorteilhaft, die Wellfeder aus Blech herzustellen, da diese dann durch ein einfaches und damit kostengünstiges Kaltumformverfahren hergestellt werden kann.

Wellfedern weisen ein lineares Kraft-Weg-Verhalten auf und können vergleichsweise große axiale Kräfte aufnehmen. Dadurch ist es möglich, die Wellfeder sehr flach auszubilden, wodurch das Rastelement - insbesondere im Vergleich zu dem in der DE 102 25 269 A1 vorgestellten - erheblich flacher ausgebildet werden kann.

Ihr lineares Kraft-Weg-Verhalten und die höhere Kraftaufnahme bei Druckbeaufschlagung ermöglichen besonders im Vergleich zu einer Bügelfeder oder einer Tellerfeder ein ermüdungsfreies Arbeiten. Dadurch eignet sich ein Rastelement der erfindungsgemäßen Ausbildung insbesondere für automatisierte Schaltgetriebe, wenn anstatt eines feinfühligen Bedieners Stellmotoren den Schaltvorgang bewerkstelligen.

Die Lage und die Ausrichtung der Wellfeder in dem Druckstück ist durch ihre geometrische Form abgesichert. Im Gegensatz zu hoch bauenden Federn ist durch die sehr flache Bauweise der Wellfedern ein Verkippen nicht möglich.

### Kurze Beschreibung der Zeichnungen

Die Erfindung ist nachfolgend anhand von Ausführungsbeispielen näher erläutert. Es zeigen:
- Figuren 1 a und 1 b: eine Anwendung eines Ausführungsbeispiels der Erfindung in einer Schaltkupplung mit einer Synchronisiereinheit im Schnitt, wobei Figur 1 a die Schaltmuffe in ihrer neutralen Position und Figur 1b die Schaltmuffe in einer geschalteten Stellung zeigt,
- Figur 2: einen Längsschnitt der Arretierung bzw. des Druckstücks nach Figur 1 a und
- Figur 3: eine perspektivische Ansicht der in das Rastelement eingesetzten Wellfeder.

### Detaillierte Beschreibung der Zeichnungen

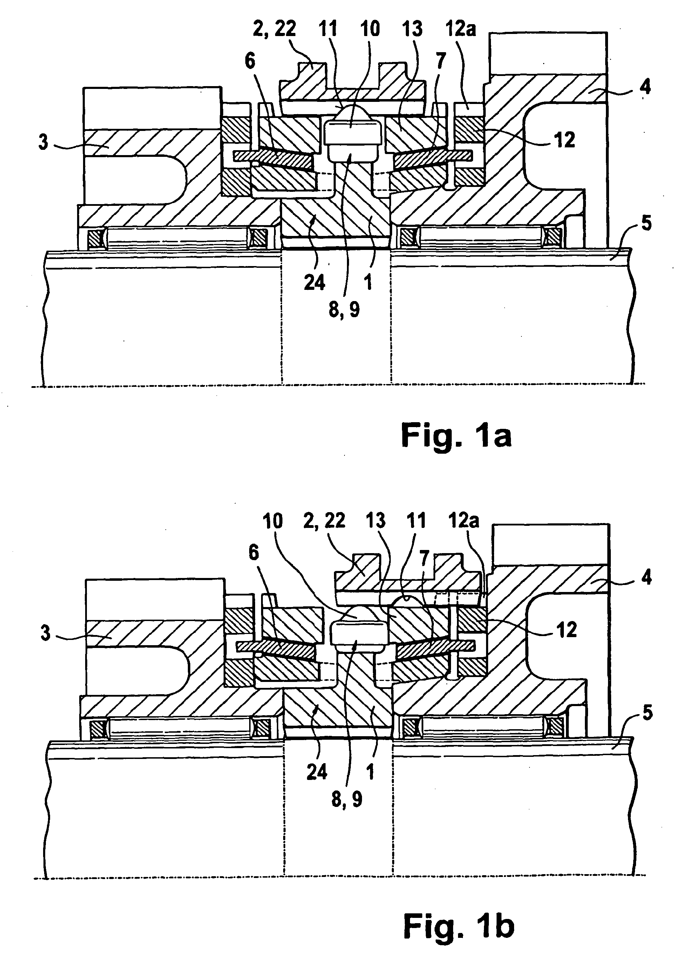

Die Figuren 1 a und 1b zeigen ein Getriebeteil 24 (Synchronkupplung) im wesentlichen bestehend aus einem Muffenträger 1 und aus einer Schaltmuffe 2 zum wahlweisen Kuppeln der Gangräder 3 und 4. Die Gangräder 3, 4 sind drehbar, aber längs fest auf einer Schaltwelle 5 gelagert. Der Muffenträger 1 sitzt verdrehfest sowie längs fest auf der Schaltwelle 5 und trägt auf seinem Außenumfang das Getriebeteil 22 in Form der Schaltmuffe 2. Die Schaltmuffe 2 ist mittels einer Verzahnung drehfest zu dem Muffenträger 1 und damit zur Schaltwelle 5 aber längs wahlweise in Richtung eines der Gangräder 3 oder 4 verschiebbar auf dem Muffenträger 1 angeordnet. An jeder Seite des Muffenträgers 1 ist längs zwischen dem Muffenträger 1 und dem Gangrad 3, 4 jeweils ein Satz 6, 7 Synchronringe angeordnet.

Der Muffenträger 1 nimmt an seinem Umfang mindestens drei Rastelemente 8 auf. Das Rastelement 8 verrastet an der Schaltmuffe 2 in ihrer neutralen Stellposition nach Figur 1 a. Das Rastelement 8 ist als ein Druckstück 9 ausgelegt. In der neutralen Stellposition stützt sich das Rastelement 8 an dem Muffenträger 1 radial ab und spannt mit einer Kappe 10 gegen die Schaltmuffe 2 vor. Dabei greift das Rastelement 8 mit der Kappe 10 in eine Rastvertiefung 11 an der Schaltmuffe 2 ein.

Die aus der neutralen Stellposition nach Figur 1 a in die geschaltete Position (Figur 1 b) längs auf dem Muffenträger 1 verschobene Schaltmuffe 2 greift in eine Kupplungsverzahnung 12a einer mit dem Gangrad 4 fest verbundenen Kupplungsscheibe 12 ein. Die Schaltwelle 5 ist über den Muffenträger 1 und die Schaltmuffe 2 mit dem Gangrad 4 drehfest verbunden, wodurch der dem Gangrad 4 zugeordnete Gang geschaltet ist. Bei der Schaltbewegung der Schaltmuffe 2 in die geschaltete Position nimmt die Schaltmuffe 2 zunächst das in die Rastvertiefung 11 eingreifende Rastelement 8 längs mit und verschiebt das Rastelement 8 gegen den äußeren Synchronring 13 des Satzes 7. Der Prozess der Vorsynchronisation ist eingeleitet.

Die weiter in Richtung der Kupplungsverzahnung 12a bewegte Schaltmuffe 2 zwingt die Kappe 10 des sich an dem äußeren Synchronring 13 abstützenden Druckstücks 9 aus der Rastvertiefung 11. Die Kappe 10 federt dabei radial ein. Beim Lösen des Ganges bewegt sich die Schaltmuffe 2 aus der Stellung nach Figur 1 b zurück in die neutrale Stellposition nach Figur 1 a. Dabei greift die mit Vorspannung an der Schaltmuffe 2 anliegende Kappe 10 erneut in die Rastvertiefung 11 ein.

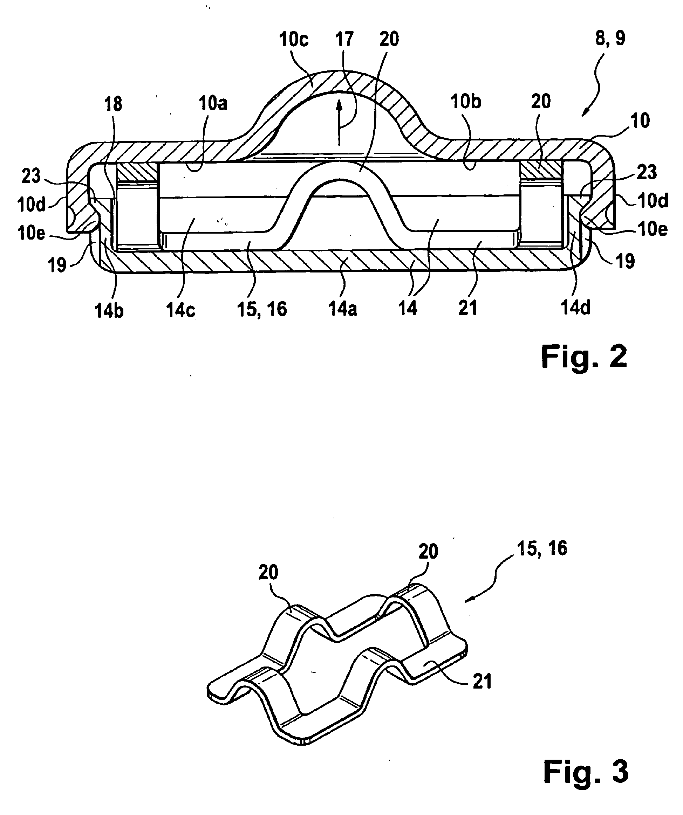

Figur 2 zeigt einen Längsschnitt durch das Rastelement 8. Das Rastelement 8 besteht aus der Kappe 10, einem Grundkörper 14 und einem Federelement 15 in Form einer Wellfeder 16. Der Grundkörper 14 ist schalenförmig mit einem quer zur mit dem Pfeil 17 gekennzeichneten Druckrichtung ausgerichteten Boden 14a. Von dem Boden 14a sind Wände in Richtung der Kappe 10 abgewinkelt, wobei in der Schnittdarstellung nur die Wände 14b, 14c und 14d bildlich dargestellt sind.

Die Kappe 10 weist einen entgegengesetzt zur mit dem Pfeil 17 gekennzeichneten Druckrichtung abgewinkelten und die Wände 14b, 14c, 14d zumindest teilweise umfassenden Rand 10d auf. Aus dem Rand 10d stehen zwei sich an dem Rand 10d einander gegenüberliegende Noppen 10e quer zur Druckrichtung hervor. Jeder der Noppen 10e greift in jeweils eine in die Druckrichtung verlaufende sowie in Druckrichtung auf die Kappe 10 zu an ihrem Ende verschlossene nutförmige Vertiefung 19 an den Wänden 14b und 14d ein. Die Vertiefung 19 ist endseitig in Richtung der Kappe 10 durch Haltenasen 23 verschlossen, wodurch die Noppen 10e entgegen der Druckrichtung den Grundkörper 14 in der Vertiefung 19 hintergreifen und somit die Kappe 10 an dem Grundkörper 14 gegen die Vorspannung der Wellfeder 16 halten.

Eine auf das Rastelement 8 ausgeübte Kraft wird über die Kappe 10 über Erhebungen 20 der Wellfeder 16 auf diese eingeleitet. Damit möglichst hohe Kräfte übertragen werden können, sind die einzelnen Erhebungen 20 möglichst weit voneinander entfernt angeordnet. Für eine effiziente Kraftübertragung ist es weiterhin vorteilhaft, die die Kontaktfläche der Wellfeder 16, also die höchsten Punkte der Erhebungen 20, zur Kappe 10 zu maximieren, indem man die Wölbung der Wellfeder 16 in der Kontaktzone an die der Kappe 10 anpasst.

Die Wellfeder 16 ist von ihrer Form und Größe dem Boden 14a angepasst. Sie besitzt die gleiche Form wie dieser, zwischen den Wänden 14b, 14c, 14d und der Wellfeder 16 verbleibt ein Spalt 18. Dieser Spalt 18 darf einerseits nicht zu schmal sein, da sich die Wellfeder 16 unter Belastung unter Ausnutzung des durch den Spalt 18 zur Verfügung gestellten Raums verformt. Eine Verformung nicht zuzulassen würde zu sehr hohen Belastungen der Wellfeder 16 führen. Andererseits darf der Spalt 18 nicht zu breit sein, da sich die Wellfeder 16 dann ohne eine Verdrehsicherung in dem Grundkörper 14 verdrehen könnte.

Figur 3 zeigt eine Wellfeder 16 für ein Rastelement mit einem rechteckigen Boden 14a. Prinzipiell sind aber auch vielseitige eckige oder runde Grundformen für die Wellfeder 16 denkbar. Die Wellfeder 16 besteht aus einem Grundelement 21, das vier Erhebungen 20 aufweist, auf jeder Rechteckseite eine. Dabei kann das Grundelement 21 in einer Ebene liegen oder aber selbst derartig verformt sein, dass die Wellen der Wellfeder 16 gleichmäßig über deren Umfang verteilt sind. Auch Mischformen dieser beiden Ausbildungen sind denkbar.

### Bezugszeichenliste

- 1: Muffenträger
- 2: Schaltmuffe
- 3: Gangrad
- 4: Gangrad
- 5: Schaltwelle
- 6: Satz Synchronring
- 7: Satz Synchronring
- 8: Rastelement
- 9: Druckstück
- 10: Kappe
- 10a: Stützfläche
- 10b: Stützfläche
- 10c: Auswölbung
- 10d: Rand
- 10e: Noppen
- 11: Rastvertiefung
- 12: Kupplungsscheibe
- 12a: Kupplungsverzahnung
- 13: äußerer Synchronring
- 14: Grundkörper
- 14a: Boden
- 14b: Wand
- 14c: Wand
- 14d: Wand
- 15: Federelement
- 16: Wellfeder
- 17: Pfeil
- 18: Spalt
- 19: Vertiefung
- 20: Erhebung

- 21: Grundelement
- 35 22: Getriebeteil
- 23: Haltenasen
- 24: Getriebeteil

## Patentansprüche

1. Rastelement (8) zum Verrasten zweier zueinander beweglicher Getriebeteile (22, 24) in wenigstens einer Stellposition, wobei das Rastelement (8) einen aus Blech geformten Grundkörper (14), an dem sich wenigstens ein Federelement (15) abstützt, aufweist und der Grundkörper (14) schalenförmig mit einem quer zur Druckrichtung ausgerichteten Boden (14a) sowie mit vom Boden (14a) abgewinkelt abgehenden Wänden (14b, 14c, 14d) ausgebildet ist, wobei der Grundkörper (14) wenigstens teilweise mit einer dem Boden (14a) in Druckrichtung gegenüber liegenden Kappe (10) abgedeckt ist, die eine vom Boden (14a) weg weisende sowie aus der Kappe (10) in die Druckrichtung nach außen hervorstehende kalottenförmige Auswölbung (10c) aufweist, wobei die Kappe (10) zu dem Grundkörper (14a) in Druckrichtung längsbeweglich an dem Grundkörper (14a) gehalten ist, wobei das Federelement (15) von dem Grundkörper (14) und der Kappe (10) wenigstens teilweise eingekapselt ist, wobei das Federelement (15), sich in dem Rastelement (8) an dem Grundkörper (14) abstützend, gegen die Kappe (10) vorgespannt ist, **dadurch gekennzeichnet, dass** das Federelement (15) als eine Wellfeder (16) ausgebildet ist.

2. Rastelement nach Anspruch 1, **dadurch gekennzeichnet, dass** das Federelement (15) dem Grundkörper (14a) in seiner Form, insbesondere dem Verlauf der Wände (14b, 14c, 14d), angepasst ist.

3. Rastelement nach Anspruch 2, **dadurch gekennzeichnet, dass** zwischen dem Grundkörper (14) und dem Federelement (15) im unbelasteten Zustand ein Spalt (18) ausgebildet ist.

4. Rastelement nach Anspruch 3, **dadurch gekennzeichnet, dass** der Spalt (18) im unbelasteten Zustand eine konstante Breite aufweist.

5. Rastelement nach Anspruch 2, **dadurch gekennzeichnet, dass** der Grundkörper (14) eine rechteckige Grundform aufweist und das Federelement (15) vier Erhebungen aufweist.

6. Rastelement nach Anspruch 6, **dadurch gekennzeichnet, dass** in mindestens einer Wand (14b, 14c, 14d) eine Vertiefung (19) mit einer an diese in Richtung Kappe (10) anschließenden Haltenase (23) angeordnet ist, wobei mindestens ein Noppen (10e) der Kappe (10) in die Vertiefung (19) eingreift und die Haltenase (23) einen radialen Vorsprung für den Noppen (10e) bildet.

## Claims

1. Detent element (8) for snapping together two relatively displaceable transmission elements (22, 24) in at least one adjusting position, said detent element (8) comprising a base body (14) shaped out of sheet metal on which at least one spring element (15) is supported, said base body (14) having a dish-shaped configuration with a bottom (14a) oriented crosswise to the pressure direction and with angled walls (14b, 14c, 14d) starting from the bottom (14a), said base body (14) being at least partially covered by a cap (10) situated opposite the bottom (14a) in pressure direction, said cap (10) comprising a cup-shaped convexity (10c) pointing away from the bottom (14a) and projecting outwards out of the cap (10) in the pressure direction, and said cap (10) being retained on the base body (14a) for longitudinal displacement in pressure direction relative to the base body (14a), said spring element (15) being at least partially encapsulated by the base body (14) and the cap (10), and said spring element (15), while being supported within the detent element (8) on the base body (14), is biased against the cap (10), **characterised in that** the spring element (15) is configured as an ondular spring (16).

2. Detent element according to claim 1, **characterised in that** the spring element (15) is matched to the base body (14a) in its shape, in particular to the shape of the side walls (14b, 14c, 14d).

3. Detent element according to claim 2, **characterised in that** a gap (18) is formed between the base body (14) and the spring element (15) in the unloaded state.

4. Detent element according to claim 3, **characterised in that**, in the unloaded state, the gap (18) has a constant width.

5. Detent element according to claim 2, **characterised in that** the base body (14) has a rectangular basic shape and the spring element (15) comprises four elevations.

6. Detent element according to claim 6, **characterised in that** a depression (19), adjoined in the direction of the cap (10) by a retaining lug (23), is arranged in at least one of the walls (14b, 14c, 14d), at least one knob (10e) of the cap (10) engages into the depression (19), and the retaining lug (23) forms a radial projection for the knob (10e).

## Revendications

1. Elément d'arrêt (8) pour encliquetage, l'un dans l'autre, de deux éléments (22, 24) de transmission déplaçables dans, au moins, une position d'ajustage, ledit élément d'arrêt (8) comprenant un corps de base (14) formé en tôle sur lequel s'appuie, au moins, un élément ressort (15), le corps de base (14) étant configuré sous la forme de cuvette avec un fond (14a) orienté en travers de la direction de pression et avec des parois (14b, 14c, 14d) qui sont repliées à partir du fond (14a), ledit corps de base (14) étant recouvert, au moins partiellement, par un chapeau (10) qui est situé vis-à-vis du fond (14a) en direction de pression, ledit chapeau (10) comprenant un bombement (10c) en forme de cuvette qui est orienté à l'opposé du fond (14a) et fait saillie à partir du chapeau (10) vers l'extérieur dans la direction de pression, ledit chapeau (10) étant retenu sur le corps de base (14a) en mouvement longitudinal par rapport au corps de base (14a) dans la direction de pression, ledit élément ressort (15) étant encapsulé, au moins partiellement, par le corps de base (14,) et par le chapeau (10), et ledit élément ressort (15) étant précontraint contre le chapeau (10) en étant supporté à l'intérieur de l'élément d'arrêt (8) sur le corps de base (14), **caractérisé en ce que** l'élément ressort (15) est configuré sous la forme d'un ressort ondulé (16).

2. Elément d'arrêt selon la revendication 1, **caractérisé en ce que** l'élément ressort (15) est adapté en forme au corps de base (14a) et, en particulier, à l'allure des parois (14b, 14c, 14d).

3. Elément d'arrêt selon la revendication 2, **caractérisé en ce que**, à l'état non chargé, un intervalle (18) est formé entre le corps de base (14) et l'élément ressort (15).

4. Elément d'arrêt selon la revendication 3, **caractérisé en ce que**, à l'état non chargé, l'intervalle (18) a une largeur constante.

5. Elément d'arrêt selon la revendication 2, **caractérisé en ce que** le corps de base (14) a une forme de base rectangulaire, et l'élément ressort (15) comprend quatre élévations.

6. Elément d'arrêt selon la revendication 6, **caractérisé en ce que**, au moins dans l'une des parois (14b, 14c, 14d) est agencée une cavité (19) à laquelle se raccorde en direction du chapeau (10), un talon de retenue (23), **en ce que**, au moins un bouton (10e) du chapeau (10) s'engage dans la cavité (19), et **en ce que** le talon de retenue (23) forme une saillie radiale pour le bouton (10e).
